# EUROPEAN PATENT SPECIFICATION

(11) **EP 1 104 356 B1**
(45) Date of publication and mention of the grant of the patent: **17.12.2003**
(21) Application number: 99943594.4
(22) Date of filing: 19.08.1999
(51) Int. Cl.: B60G 3/18, B60G 11/28

(54) **WHEEL SUSPENSION ARRANGEMENT AND METHOD FOR MOUNTING THE DEVICE**
RADAUFHÄNGUNGSVORRICHTUNG UND VERFAHREN ZU SEINER MONTAGE
DISPOSITIF SUSPENSION DE ROUE ET PROCEDE DE MONTAGE DE CE DISPOSITIF

(30) Priority: 19.08.1998 SE 9802767
(43) Date of publication of application: 06.06.2001
(73) Proprietor: SJÖLUND, Anders, S-921 34 Lycksele (SE)
(72) Inventor: SJÖLUND, Anders, S-921 34 Lycksele (SE)
(74) Representative: Onn, Thorsten
(86) International application number: SE9901409
(87) International publication number: WO00010821

(56) References cited:
- EP-A1- 0 501 043
- EP-A1- 0 588 694
- WO-A1-96/13396
- DE-B- 1 078 882

## Description

This invention relates to a method of modifying the front carriage of a transport vehicle of the light type, its front carriage normally having a transversal girder, at each end of which the lower portion of an essentially vertically directed helical spring is fastened, and an upper transversal link, at the inner end portion of which the upper end portion of the helical spring is fastened.

This type of front carriage is common today on transport vehicles of the light type, i.e. up to a weight of about 5 tons, which vehicles are used for freight and passenger transportation.

In recent time there have arisen wishes that these light-type vehicles for passenger transportation shall be provided with an air spring system in the front carriage, which should make possible for the vehicle to be raised and lowered, whereby stepping into and out of the vehicle should be facilitated.

This invention intends to meet with these wishes and to provide light-type transport vehicles with an air spring system in its front carriage. This has been made possible by a method according to claim 1.

A preferred embodiment of an arrangement for making a carrying out of the new method possible shall be described more closely below with reference to the accompanying drawing, where Fig. 1 shows a part of an existing front carriage for a light-type transport vehicle, **Fig. 2 and 3** show the new arrangement, this one being seen obliquely from above from the one and the other side, respectively.

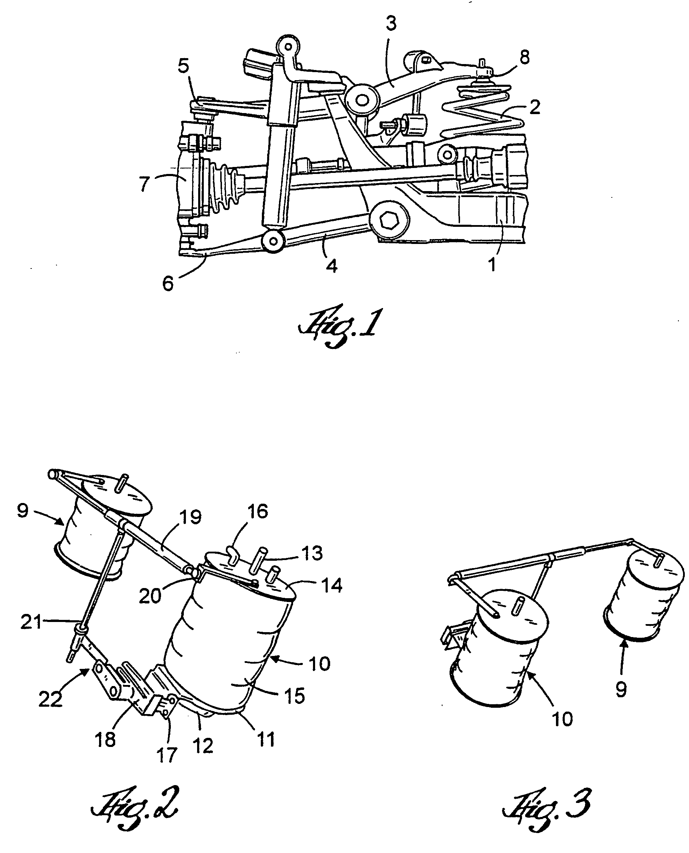

Referring to Fig. 1 is shown there a part of an existing front carriage. This one comprises a transverse girder 1, to both end portions of which the lower part of a helical spring 2 is fastened. Furthermore, the front carriage has an upper 3 and a lower slewing bracket 4, both of which being articulately connected with the girder 1. The outer end portions 5, 6 of the two slewing brackets are connected with the fastener 7 of the vehicle for the front wheel. The inner end portion of the upper slewing bracket constitutes a fastener for the upper part of the helical spring 2. As appears from Fig. 1, the helical spring 2 has an essentially vertical extension.

In Figs. 2 and 3 is shown the new air spring arrangement that shall replace the helical springs 2 in the known front carriage, which means that the two helical springs are taken loose.

The new air spring arrangement comprises two air spring units 9, 10, which are essentially alike, and each one of which shall replace a helical spring 2 in the existing front carriage. Each unit 9, 10 comprises a lower plate 11, which on its underside has a portion 12, projecting downwards, which is intended to be fastened on that place of the girder 1, where the lower part of the helical spring has been fastened. The unit further comprises an upper plate 14, provided with an upwards-projecting, central bolt 13, which plate is intended to be fastened to the inner end portion 8 of the upper slewing bracket 3. Between these two plates is a rubber bellows 15 fastened, the two end portions of which being fastened on the topside of the plate 11 and the underside of the plate 14. The rubber bellows, in a usual way, can be filled with air, whereby the distance between the plates 11, 14 increases, or be evacuated of air, whereby the distance between the plates is reduced, via an air nipple 16, which is arranged on the topside of the upper plate 14, and which in a mounted condition is in connection with an air tank.

This means that when the front carriage of the vehicle shall be lowered, air is let out of the air bellows via the nipple 16, and when the height of the front carriage over the ground shall be increased, air is let into the air bellows from the air tank via the nipple 16.

On the lower plate 11 of the one air spring unit 10 there is arranged a fastener 17 for a mechanical level indicator 18 of known type, which is intended to sense and adjust the height of the vehicle over the ground. This level indicator is in a known way connected partly with the air tank, partly with respective air bellows 15 via the air nipple 16.

According to this embodiment the two air spring units 9, 10 are connected with each other by a rod 19, which is adjustable in its longitudinal direction and is fastened to a bar 20, projecting outwards from the upper plate 14 of each unit. From the rod 19 projects downwards an essentially vertical rod 21, which at its lower portion is connected with the level indicator 18 via a lower bar 22.

Due to the mentioned design with the rod 19, connecting the units 9, 10 with each other, and its connection with the level indicator 18, that advantage is achieved that the movements of the suspension between the two units are balanced out, whereby the comfort of the vehicle is improved.

The modification of the front carriage of the transport vehicle is made in the following way:

The two helical springs are loosed and removed, whereafter the first air spring unit is fastened on the former place of the first helical spring, whereas the second air spring unit is fastened on the former place of the second helical spring.

To connect the two air spring units with a rod being in connection with a mechanical level indicator, as has been described above, is not necessary but has appeared to be advantageous. Thus, this embodiment can be regarded as a further development of the invention.

Besides the previously mentioned advantages like the ability to raise and lower the vehicle, the application of the air spring units means that the wheel suspension of the vehicle becomes better with a more soft riding comfort as a result.

The invention is not limited to the described embodiment but can be modified within the scope of the following claims. Thus, the mechanical level indicator could be replaced by an electronic level indicator.

## Claims

1. A method of modifying the front carriage of a transport vehicle of the light type, its front carriage having a transversal girder, at each end of which the lower portion of an essentially vertically directed helical spring is fastened, and an upper transversal link, at the inner end portion of which the upper end portion of the helical spring is fastened, by the following steps:
- the helical springs are loosened and removed;
- an air spring arrangement comprising two air spring unit (9, 10) is place at each of the positions where the helical springs have been placed and is fastened in the mentioned front carriage;
- each of the air spring units (9, 10) is connected via an air tube with a mechanical level indicator (18), which in its turn is connected with an air tank of the vehicle, the level indicator (18) sensing and adjusting the height of the vehicle over the ground;
- the upper portions of the two air spring units (9, 10) are connected by a rod (19), which in its turn is connected with the level indicator (18) via one or more other means (21, 22), whereby the movements of the suspension of the two units (9, 10) are balanced out.

2. An arrangement useable for carrying out the method according to claim 1, the arrangement comprising two air spring units (9, 10), each unit comprising a lower (11) and an upper (14) plate, between which an air bellows (15) is fastened, which can be blown up as well as evacuated, **characterized in that** the upper portions of the two air spring units (9, 10) are connected by a rod (19), which in its turn is connected with a mechanical level indicator (18) via one or more means (21, 22), and that the level indicator is arranged on the one unit (9, 10).

3. An arrangement according to claim 2, **characterized in that** one of the air spring units (9, 10) is provided with an electronic level indicator.

4. An arrangement according to claim 2 or 3, **characterized in that** each unit (9, 10) at its top portion is provided with a means (16) for introducing air into and taking out air from, respectively, the air bellows, which means (16) is connected with an air tank via the level indicator.

5. An arrangement according to claim 2 or 3, **characterized in that** the lower plate (11) of each unit (9,10) has a downwardly projecting portion (12), which is intended to fit into a cup-shaped recess in the one end portion of a transversal girder (1) of the front carriage of the vehicle, and that the upper plate (14) of each unit (9,10) has a centrally, upwards projecting bolt (1) for fastening of the unit in an upper slewing bracket (3) of the front carriage of the vehicle.

## Patentansprüche

1. Verfahren zur Abänderung des vorderen Fahrgestells eines leichten Transportfahrzeugs, dessen vorderes Fahrgestell einen Querträger aufweist, an dessen Enden jeweils der untere Teil einer im wesentlichen senkrecht stehenden Schraubenfeder befestigt ist, sowie einen oberen Querlenker, an dessen innerer Endpartie das obere Ende der Schraubenfeder befestigt ist, mit folgenden Schritten:
- die Schraubenfedern werden gelöst und entfernt;
- eine Luftfeder-Anordnung mit zwei Luftfedereinheiten (9, 10) wird jeweils an der Stelle angebracht, wo sich die Schraubenfedern befanden, und im genannten vorderen Fahrgestell befestigt;
- die Luftfedereinheiten (9, 10) werden jeweils über einen Luftschlauch mit einer mechanischen Niveauanzeige (18) verbunden, welche ihrerseits mit einem Luftbehälter des Fahrzeugs verbunden ist, wobei die Niveauanzeige (18) die Höhe des Fahrzeugs über dem Boden erfasst und regelt;
- die Oberteile der beiden Luftfedereinheiten (9, 10) werden über eine Stange (19) miteinander verbunden, welche ihrerseits über ein anderes Mittel oder mehrere (21, 22) mit der Niveauanzeige (18) verbunden ist, wodurch die Bewegungen der Aufhängung der zwei Einheiten (9, 10) ausgeglichen werden.

2. Vorrichtung zur Durchführung des Verfahrens nach Anspruch 1, enthaltend zwei Luftfedereinheiten (9, 10), welche je eine untere (11) und eine obere (14) Platte aufweisen, zwischen welchen ein Luftbalg (15) befestigt ist, der aufblasbar und entleerbar ist, **dadurch gekennzeichnet, dass** die Oberteile der zwei Luftfedereinheiten (9, 10) über eine Stange (19) miteinander verbunden sind, welche ihrerseits über ein weiteres Mittel oder mehrere (21, 22) mit einer mechanischen Niveauanzeige (18) verbunden ist, und dass die Niveauanzeige auf einer der Einheiten (9, 10) angeordnet ist.

3. Vorrichtung nach Anspruch 2, **dadurch gekennzeichnet, dass** eine der Luftfedereinheiten (9, 10) eine elektronische Niveauanzeige aufweist.

4. Vorrichtung nach Anspruch 2 oder 3, **dadurch gekennzeichnet, dass** jede Einheit (9, 10) an ihrem Oberteil mit einem Mittel (16) versehen ist, um Luft in die Luftbälge einzubringen bzw. aus denselben zu entnehmen, welches Mittel (16) über die Niveauanzeige mit einem Luftbehälter verbunden ist.

5. Vorrichtung nach Anspruch 2 oder 3, **dadurch gekennzeichnet, dass** die untere Platte (11) der Einheiten (9, 10) einen nach unten weisenden Teil (12) aufweist, der jeweils in eine schalenförmige Vertiefung an der einen Endpartie eines Querträgers (1) des vorderen Fahrgestells des Fahrzeugs passt, und dass die obere Platte (14) der Einheiten (9, 10) einen mittig angeordneten, nach oben ragenden Bolzen (1) zur Befestigung der Einheit in einem oberen Schwenkhebel (3) des vorderen Fahrgestells des Fahrzeugs aufweist.

## Revendications

1. Procédé de modification du train avant d'un véhicule de transport du type léger, comprenant une traverse à chacune des extrémités de laquelle est fixée la partie inférieure d'un ressort hélicoïdal disposé essentiellement verticalement, et un bras supérieur de suspension à l'extrémité intérieure duquel est fixée la partie supérieure du ressort hélicoïdal, avec les étapes suivantes:
- les ressorts hélicoïdaux sont détachés et enlevés;
- un arrangement de ressort pneumatique comprenant deux unités (9, 10) à ressort pneumatique est chaque fois mis en place à l'endroit où se trouvaient les ressorts hélicoïdaux et fixé au train avant mentionné;
- chacune des unités à ressort pneumatique (9, 10) est reliée, par un tube à air, à un indicateur de niveau (18) mécanique qui est relié à son tour à un réservoir à air du véhicule, l'indicateur de niveau (18) détectant et réglant la hauteur du véhicule au-dessus du sol;
- les parties supérieures des deux ressorts pneumatiques (9, 10) sont reliées entre elles par une tige (19) qui est reliée à son tour à l'indicateur de niveau (18) par l'intermédiaire d'un ou de plusieurs moyens (21, 22) de manière à équilibrer les mouvements de la suspension des deux unités (9, 10).

2. Dispositif pour la mise en oeuvre du procédé selon la revendication 1, le dispositif comprenant deux unités à ressort pneumatique (9, 10) dont chacune comporte une plaque inférieure (11) et supérieure (14) entre lesquelles est fixé un soufflet à air (15) pouvant être gonflé et évacué, **caractérisé en ce que** les parties supérieures des deux unités à ressort pneumatique (9, 10) sont reliées entre elles par une tige (19) qui est reliée à son tour par l'intermédiaire d'un ou de plusieurs moyens (21, 22) à un indicateur de niveau (18) mécanique, et **en ce que** l'indicateur de niveau est disposé sur l'une des unités (9, 10).

3. Dispositif selon la revendication 2, **caractérisé en ce que** l'une des unités à ressort pneumatique (9, 10) est munie d'un indicateur de niveau électronique.

4. Dispositif selon la revendication 2 ou 3, **caractérisé en ce que** chaque unité (9, 10) est munie dans sa partie supérieure d'un moyen (16) permettant d'introduire de l'air dans le soufflet resp. de l'évacuer, lequel moyen (16) est relié à un réservoir à air par l'indicateur de niveau.

5. Dispositif selon la revendication 2 ou 3, **caractérisé en ce que** la plaque inférieure (11) de chaque unité (9, 10) présente une partie (12) en saillie vers le bas, adaptée à un évidement en forme de coupe dans l'une des extrémités d'une traverse (1) du train avant du véhicule, et **en ce que** la plaque supérieure (14) de chaque unité (9, 10) présente un boulon (1) central en saillie vers le haut pour la fixation de l'unité dans un levier pivotant supérieur (3) du train avant du véhicule.
